# EUROPÄISCHE PATENTSCHRIFT

(11) **EP 0 934 820 B1**
(45) Veröffentlichungstag und Bekanntmachung des Hinweises auf die Patenterteilung: **14.04.2004**
(21) Anmeldenummer: 99101936.5
(22) Anmeldetag: 29.01.1999
(51) Int. Cl.: B32B 15/04, F16J 15/12

(54) **Metallverstärkter Graphitschichtstoff**
Metal reinforced graphite laminate
Stratifié en graphite renforcé metal

(30) Priorität: 04.02.1998 DE 19804283
(43) Veröffentlichungstag der Anmeldung: 11.08.1999
(73) Patentinhaber: SGL CARBON AG, 65203 Wiesbaden (DE)
(72) Erfinder: Mechen, Silvia, 86405 Meitingen (DE); Öttinger, Oswin, Dr.-Ing., 86405 Meitingen (DE); Römmler, Mike, Dr., Los Angeles, CA 90024 (US)

(56) Entgegenhaltungen:
- EP-A- 0 352 608
- EP-A- 0 640 782
- GB-A- 1 166 370
- US-A- 5 100 737
- PATENT ABSTRACTS OF JAPAN vol. 014, no. 583 (M-1064), 26. Dezember 1990 (1990-12-26) & JP 02 253939 A (TAENAKA KOGYO KK;OTHERS: 02), 12. Oktober 1990 (1990-10-12)

## Beschreibung

Die Erfindung betrifft einen Schichtstoff mit großer Druckfestigkeit, guter Hitzebeständigkeit und geringer Permeabilität gegenüber Fluiden, der aus übereinander im Wechsel und parallel angeordneten Lagen von Graphitfolien und Metallfolien besteht und in dem die Graphitfolien mit den Metallfolien verbunden sind.

Schichtstoffe dieses Typs werden insbesondere in der Dichtungstechnik und für dichtende Auskleidungen verwendet. In der europäischen Patentanmeldung EP 0 640 782 wird ein Dichtungsmaterial für Anspuffrohre beschrieben, dass aus eines beidseitig durch Stahlplatten mit einer Diche zwischen 0,15 und 0,30 mm bedechten Graphitschicht mit einer Diche zwischen 0,8 und 2,0 mm besteht. Die Graphitschicht wird optional durch mindestens ein Spießblech verstärkt. Diese verstärkte Graphitschicht ist so aufgebaut, dass jedes dieses Spiessbleche jeweils zwischen zwei Graphitfolien eingebettet ist. In der US-Patentschrift 5,128,209 ist ein Dichtungswerkstoff beschrieben, der aus Lagen aus einem Fluorpolymer, Graphitfolien und Metallfolien besteht, wobei die Lagen miteinander durch einen Klebstoff verbunden sind. Die Lagen aus dem Fluorpolymer bestehen aus porösem und damit für Fluide durchlässigem Material. Sie verleihen der aus den Graphitfolien und den Fluorpolymerfolien bestehenden Komponente des Verbundwerkstoffs eine größere Festigkeit, Zähigkeit, Zugfestigkeit und eine bessere Handhabbarkeit. Die Nachteile dieses Dichtungswerkstoffs sind einmal die Durchlässigkeit der Fluorpolymerfolien für Fluide und das Vorhandensein von Klebern als verbindendes Mittel zwischen den Schichten. Die Fluorpolymerfolien tragen zur Dichtigkeit des Gesamtsystems praktisch nichts bei, was sich besonders bei Dichtungen für hohe und höchste Dichtigkeitsanforderungen negativ auswirkt. Die Kleber sind besonders bei mit hohen Drücken oder Spannungen belasteten Dichtungen eine Schwachstelle, weil auf ihnen die Lagen des Schichtstoffes gleiten können, was letztlich zur Funktionsunfähigkeit der Dichtung führt oder, und dies besonders im Zusammenwirken mit höheren Temperaturen, sich in der Kleberschicht feine Risse bilden können, die die Dichtwirkung beeinträchtigen.

Es war die Aufgabe der der Patentanmeldung zugrunde liegenden Erfindung, einen Schichtstoff für die Verwendung für Dichtungszwecke zu schaffen, der eine verbesserte Dichtigkeit und eine verbesserte Druckfestigkeit bei einer Dauertemperaturbeständigkeit von mindestens 150°C aufweist.

Die Aufgabe wird durch einen Schichtstoff gemäß dem Oberbegriff des Patentanspruchs 1 gelöst, der dadurch gekennzeichnet ist, daß jede der beiden, den Schichtstoff nach oben und unten begrenzenden Lagen aus einer Metallfolie besteht und
daß diese, den Schichtstoff nach oben und unten begrenzenden Metallfolien auf ihren nach außen weisenden Flachseiten vollständig mit einer gasdichten Folie aus einem organischen Polymeren mit einer Dauertemperaturbeständigkeit von mindestens 150°C bedeckt und verbunden sind.
Die abhängigen Patentansprüche geben Ausgestaltungen und vorteilhafte Varianten der Erfindung wieder.

Die Wirkungsweise des Schichtstoffes als Dichtungsmaterial ist wie folgt: Die Graphitfolie bzw. die Graphitfolien, die eine ausgezeichnete Hochtemperaturbeständigkeit aufweist/ aufweisen, geben dem Schichtstoff eine große Kompressibilität, ein gutes Rückfederungsvermögen und eine äußerst geringe Kriechneigung unter Druck. Die ebenfalls temperaturbeständigen Metallfolien kriechen nicht unter Druck und verleihen dem Schichtstoff eine große Druckfestigkeit. Sie bilden eine zusätzliche impermeable Barriere für Fluide. Aber sie können sich nicht den Unebenheiten von Flächen, denen sie anliegen wie z.B. Flanschen, mittels derer der zum Erzielen einer Dichtwirkung notwendige Druck auf den Schichtstoff oder eine daraus hergestellte Dichtung übertragen werden soll, dichtend anpassen. Diese Funktion übernehmen die den Schichtstoff nach außen begrenzenden Folien aus einem organischen Polymeren. Infolge ihrer guten Fließfähigkeit unter Druck passen sie sich den an derartigen Flächen vorhandenen Unebenheiten und Verletzungen hervorragend an und bewirken so eine ausgezeichnete Abdichtung. Wenn sie in genügend geringer Dicke verwendet werden, fällt ihre an sich für Dichtungen ungünstige Neigung zum Kriechen und ihre geringe Fähigkeit zum Rückfedern nicht ins Gewicht, da die dadurch hervorgerufenen negativen Effekte von den anderen Komponenten des Schichtstoffes, insbesondere von dem Graphitanteil mehr als kompensiert werden.

Die Verbindungen zwischen den verschiedenen Lagen des Schichtstoffs können mit einem geeigneten Kleber, der eine Dauertemperaturbeständigkeit von mindestens 150°C haben muß, hergestellt werden. Bevorzugt werden jedoch völlig kleberfreie Verbindungen sowohl zwischen den Graphitfolien und den Metallfolien als auch zwischen den Metallfolien und den Polymerfolien.

Unter dem Begriff Graphitfolien werden im Sinne dieser Erfindung Graphitfolien wie auch Graphitlaminate verstanden, die nach bekannten Verfahren durch Zusammenpressen oder Kalandrieren von expandiertem, sogenanntem wurmförmigem Graphit erhalten werden. Expandierter Graphit wird durch plötzliches Zersetzen von Graphitsalzen wie Graphithydrogensulfat bei hohen Temperaturen erzeugt. Die Herstellung von wurmförmigem Graphit kann beispielsweise gemäß US 4,091,083 geschehen.
Die für das Herstellen von erfindungsgemäßen Schichtstoffen verwendeten und in diesen Schichtstoffen befindlichen Graphitfolien können eine Rohdichte im Bereich von 0,1 g/cm³ bis 1,8 g/cm³ aufweisen. Sie haben vorzugsweise einen Kohlenstoffgehalt im Bereich von 90 bis 99,95 Gewichtsprozent. Ihre Dicke liegt im Bereich von 0,1 mm bis 4 mm.

Eine bevorzugte Ausführungsform des Schichtstoffs besteht aus einer mittig angeordneten Graphitfolie, die auf ihren beiden Flachseiten mit je einer Metallfolie verbunden ist und bei dem die beiden nach außen weisenden Oberflächen der Metallfolien mit einer Polymerfolie bedeckt und verbunden sind.

Eine andere bevorzugte Variante des Schichtstoffs besteht aus einer in der Mitte des Schichtstoffs angeordneten Metallfolie, die auf ihren beiden Flachseiten mit je einer Graphitfolie verbunden ist. Die zwei nach außen zeigenden, freien Flachseiten der Graphitfolien sind mit je einer Metallfolie verbunden und die zwei nach außen weisenden, freien Flachseiten der Metallfolien sind mit einer Polymerfolie verbunden.

Von den im Inneren des Schichtstoffs befindlichen Metallfolien, die nicht mit Polymerfolien verbunden sind, kann eine oder es können mehr als eine als Spießblech ausgebildet sein, wobei die Spieße nach nur einer oder nach beiden Seiten des Spießbleches ausgerichtet sein können.

Das Verbinden der Metallfolien mit den Polymerfolien kann nach allen bekannten Verfahren durchgeführt werden. Vorzugsweise wird jedoch ein Verbinden ohne Anwendung von Klebern vorgenommen. Am besten hat sich bei den für diese Erfindung in Frage kommenden Polymerfolien das lösungsmittelfreie Verbinden der Metallfolien mit den Polymer-folien durch thermisches Verschweißen bewährt, das sogar für Folien aus Polytetrafluorethylen erfolgreich verwendbar ist. Dieses Verschweißen geschieht vorteilhafterweise unter zusätzlichem Anwenden von Druck, wobei sowohl Gesenkpressen als auch Walzenpressen verwendet werden können. Beim Herstellen der Verschweißungen ist es vorteilhaft, wenn die Metallfolien und die Polymerfolien eine Temperatur aufweisen, die im Schmelzbereich der Polymerfolien liegt.

In machen Fällen ist es vorteilhaft, wenn die Metallfolien eine Temperatur aufweisen, die im oberen Bereich des Schmelzbereichs der Polymerfolien liegt und die Polymerfolien eine Temperatur haben, die unterhalb diese Bereichs liegt.

Das Verbinden der Oberflächen der Graphitfolien mit denen der Metallfolien kann mittels Klebern oder durch Eindrücken der verankernd wirkenden Oberflächen von Spießblechen in die Graphitfolien ohne den Einsatz von Klebern geschehen. Kleber haben jedoch die eingangs beschriebenen Nachteile und Spießbleche werden vorzugsweise nur in der Mitte des Schichtstoffs verwendet. Die bevorzugten Methoden zum Verbinden der Oberflächen der Graphitfolien mit denen der Metallfolien arbeiten klebstofffrei. Nach einer Methode werden die beiden Folien an den Flächen, mit denen sie verbunden werden sollen, in Kontakt gebracht und unter Anwendung von Druck und Temperaturen im Bereich von 150 bis 300°C zusammengepreßt. Bei kleineren Flächenerstreckungen kann dies in Gesenkpressen geschehen, bei großen Bahnen werden heizbare Doppelbandpressen oder Walzenstühle verwendet. Wenn man eine äußerst fest haftende Verbindung der Metall- mit den Graphitfolien herstellen will, bedient man sich als zweiter bevorzugter Methode des Verfahrens gemäß EP 0 616 884 B1, bei dem die Flächen, die verbunden werden sollen, in dünnst möglicher Schicht mit einer an sich als Trennmittel wirkenden Substanz belegt werden und die Verbindung durch Druck und Temperatureinwirkung hergestellt wird.

Die Metallfolien des Schichtstoffes können aus jedem für Dichtungszwecke verwendbaren und in Folienform herstellbaren Metall bestehen. Bevorzugt werden jedoch Metallfolien aus Aluminium, Aluminiumlegierungen, Kupfer und Kupferlegierungen und aus einem korrosionsfesten Metall oder einer korrosionsfesten Metallegierung wie z.B. Folien aus Edelstahl verwendet. Die Metallfolien haben vorzugsweise eine Dicke im Bereich von 0,005 bis 1 mm. In besonderen Fällen kann die Dicke auch außerhalb dieses Bereichs liegen.

Die den Schichtstoff an den beiden Flachseiten begrenzenden Polymerfolien müssen eine Dauertemperaturbeständigkeit von mindestens 150°C, vorzugsweise eine Dauertemperaturbeständigkeit von mindestens 200°C und besonders bevorzugt eine Dauertemperaturbeständigkeit von 250°C haben. Dauertemperaturbeständigkeit im Sinne dieser Erfindung bedeutet, daß die jeweilige Folie bei der angegebenen Temperatur an Luft nicht schmilzt oder sich merklich zersetzt. Alle Folien, die diese Merkmale aufweisen, sind als Bestandteil des erfindungsgemäßen Schichtstoffes geeignet. Bevorzugt bestehen die Folien jedoch aus einem Material aus der Gruppe Polyaryletheretherketon, Polyaryletherketon, Polyphenylensulfid, Polyarylsulfon, Polyethersulfon, Polyimid, Polyamidimid, fluorhaltige Polymere. Besonders bevorzugt sind fluorhaltige Polymere aus der Gruppe Polytetrafluorethylen, Polytrifluorchlorethylen, Tetrafluorethylen-Hexafluorpropylen-Copolymerisat, Copolymerisate von Tetrafluorethylen mit Perfluoralkylvinylether, Copolymerisate von Ethylen und Tetrafluorethylen, Polyvinylidenfluorid, wobei von diesen Folien wieder solche bevorzugt sind, die aus perfluorierten organischen Polymeren bestehen. Die in dem Schichtstoff enthaltenen Polymerfolien haben eine Dicke im Bereich von 0,005 bis 1,0 mm, wobei Dicken im Bereich von 0,03 bis 0,2 mm bevorzugt sind.

Die erfindungsgemäßen Schichtstoffe können als abdichtende Abdeckungen oder als Auskleidungen Verwendung finden. Hauptsächlich dienen sie jedoch als Werkstoff für das Herstellen von Dichtungen, insbesondere von Flachdichtungen.

Nachfolgend wird die Erfindung anhand der Figuren 1 bis 4 durch lediglich schematische Wiedergaben beispielhaft weiter erläutert.

Es zeigen:
Die Figuren 1, 2 und 3, Querschnitte durch verschiedene Typen erfindungsgemäßer Schichtstoffe;
Figur 4, einen Querschnitt durch einen nicht durch die Patentanmeldung beanspruchten Schichtstoff.
Figur 5, die Abhängigkeit der spezifischen Leckagerate von der Flächenpressung für eine Dichtung aus einem erfindungsgemäßen Schichtstoff und ein Vergleichsbeispiel.

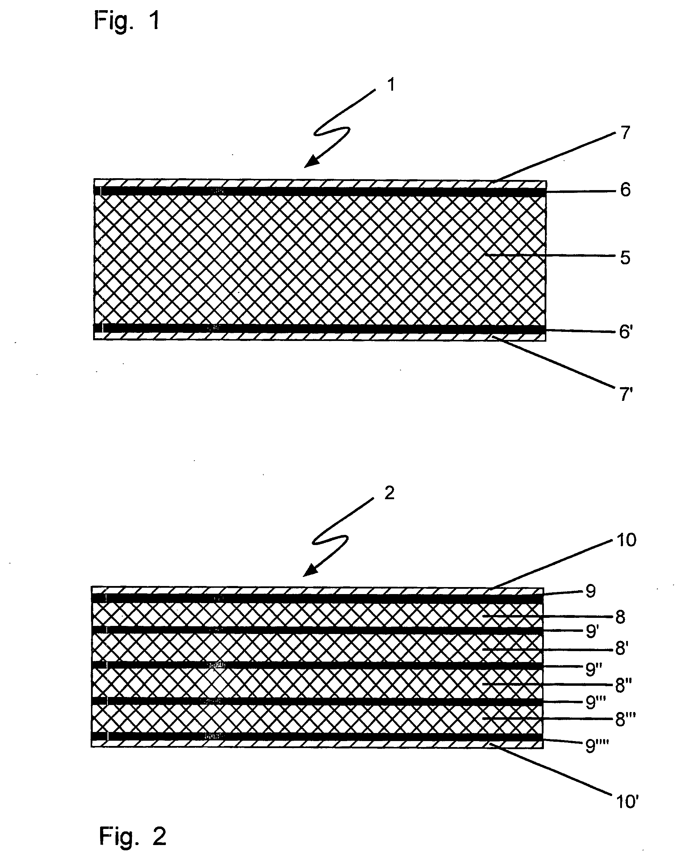

Fig. 1 gibt einen Schichtstoff (1) wieder, der aus einem Kern (5) aus einem Graphitlaminat besteht. Die beiden Flachseiten dieses Kerns (5) sind binderfrei mit je einer Metallfolie (6, 6') aus Kupfer verbunden, deren nach außen zeigende Flachseiten je mit einer Polymerfolie (7, 7') aus Polyetherketon vollständig belegt und binderfrei verbunden sind.

Fig. 2 stellt einen Schichtstoff (2) dar, der aus insgesamt 4 Lagen Graphitfolie (8, 8', 8'', 8'''), die auf ihren Flachseiten ohne Verwendung eines Klebstoffes mit Metallfolien (9, 9', 9'', 9''', 9'''') aus Aluminium verbunden sind. Die Verbindung der Metallfolien (9, 9', 9'', 9''', 9'''') mit den Graphitfolien (8, 8', 8'', 8''') wurde durch das Verfahren gemäß EP 0 616 884 B1 bewerkstelligt. Die nach außen zeigenden Flachseiten der beiden außen liegenden Metallfolien (9, 9'''') sind mit je einer Polymerfolie (10, 10') aus Tetrafluorethylen-Perfluorpropylen-Copolymer klebstofffrei verbunden.

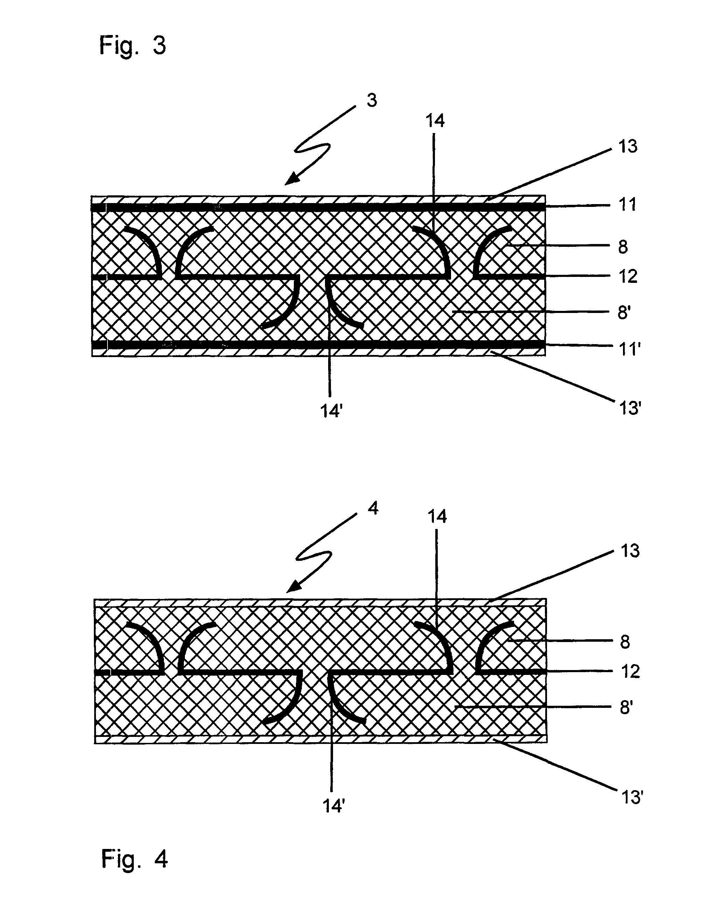

Fig. 3 zeigt einen Schichtstoff (3), der in seinem Inneren ein auf beiden Seiten Spieße (14, 14') tragendes Spießblech (12) aus Edelstahl aufweist, das auf seinen beiden Flachseiten mit seinen Spießen (14, 14') in je eine Graphitfolie (8, 8') eingreift. Die beiden nicht mit dem Spießblech (12) verbundenen Flachseiten der Graphitfolien (8, 8') sind ohne Verwendung eines Klebstoffs mit je einer Metallfolie (11, 11') aus Edelstahl kleberfrei verbunden und die nach außen weisenden Flachseiten dieser beiden Metallfolien (11, 11') sind mit je einer Polymerfolie (13, 13') aus Polytetrafluorethylen verbunden. Die Verbindung zwischen den Polytetrafluorethylenfolien (13, 13') und den Edelstahlfolien (11, 11') wurde durch Verschweißen der zu paarenden Folien bei einer Temperatur von ca. 380°C unter Druck auf einer Doppelbandpresse hergestellt.

Fig. 4 ist ein Schichtstoff (4), der eine wesentlich niedrigere Druckfestigkeit hat als die durch die Figuren 1, 2 und 3 beispielhaft dargestellten, erfindungsgemäßen Schichtstoffe (1), (2) und (3). In seinem Aufbau entspricht dieser Schichtstoff dem Schichtstoff (3) der Fig. 3 mit dem Unterschied, daß in ihm die Metallfolien (11, 11') zwischen den Polymerfolien (13, 13') und den Graphitfolien (8, 8') fehlen. Wie später gezeigt werden wird, hat dieser Schichtstoff (4) eine wesentlich geringere Druckfestigkeit als erfindungsgemäße Schichtstoffe.

### Ausführungsbeispiele:

### Beispiel 1:

Herstellung eines Schichtstoffes mit einem Aufbau gemäß Fig. 3. Zum Herstellen des Kerns des Schichtstoffes wurden zwei Bahnen 1,05 mm dicker Graphitfolien mit einer Rohdichte von 0,9 g/cm³ nach einem allgemein bekannten Verfahren in einem Walzenstuhl, dessen zwei Walzen auf eine Spaltbreite von 1,9 mm eingestellt worden waren mit einem beidseitig mit Spießen versehenen Spießblech aus Edelstahl, Material-Nr. 1.4401 das eine Blechstärke von 0,1 mm hatte, so miteinander verwalzt, daß ein spießblechverstärkter Graphitfolienkörper entstand, der auf beiden Seiten je eine Graphitfolie mit einer Rohdichte von 1,0 g/cm³ aufwies. Unabhängig von dem beschriebenen Verbinden des Spießbleches mit den zwei Graphitfolien wurde eine 50 µm dicke Edelstahlfolie, Material-Nr. 1.4401 mit einer Oberflächenrauhigkeit R_{z} von ca. 10 µm mit einer ebenfalls 50 µm dicken Polymerfolie aus Polytetrafluorethylen (TFM 1700, Hersteller Fa. Dyneon, Burgkirchen, Deutschland) kleberfrei verbunden. Das Verbinden wurde in einer Heißpresse mit Preßplatten von großer Planparallelität, die hart-verchromte, polierte Oberflächen hatten, die mit einem Trennmittel beschichtet worden waren, durchgeführt. Die beiden Preßplatten hatten eine Temperatur von ca. 370 °C. Die mit der Polymerfolie belegte Metallfolie wurde in die Presse eingelegt und 5 Minuten lang unter einem Preßdruck von 2 MPa verpreßt. Nach dem Entnehmen des Metallfolien-Polymerfolien-Verbundes aus der Presse und dem Abkühlen dieses Verbundes auf Raumtemperatur wurde die freie Metalloberfläche des Metallfolien-Polymerfolien-Verbundes für das Verbinden mit dem spießblechverstärkten Graphitfolienkörper mit einer dünnen Schicht aus einer Mischung aus einer Siloxanemulsion und einem Fettalkohol gemäß EP 0 616 884 B1 versehen. Nach dem Trocknen der Emulsion-Fettalkohol-Mischung wurde zum Herstellen des Schichtkörpers ein Stapel folgenden Schichtaufbaus hergestellt: 1. Verbundplatte aus Polymerfolie und Metallfolie, 2. spießblechverstärkter Graphitfolienkörper, 3. Verbundplatte aus Polymerfolie und Metallfolie. In dem Stapel zeigten die Polymerfolien des Polymerfolien-Metallfolien-Verbundkörpers stets nach außen und die mit der Siloxanemulsion-Fettalkohol belegten Metalloberflächen stets zur Graphitseite des spießblechverstärkten Graphitfolienkörpers hin. Der Stapel wurde dann in eine geheizte Gesenkpresse überführt und bei einer Temperatur von 200 °C unter einer Flächenpressung von 7 MPa ca. 1 Stunde lang verpreßt. Mit Ausschnitten aus diesem Schichtstoff wurden Messungen durchgeführt über deren Ergebnisse weiter unten berichtet wird.

### Beispiel 2:

In diesem Beispiel wird das Herstellen eines Schichtstoffes beschrieben, der in seinem Aufbau dem Schichtstoff 2 in Fig. 2 entspricht. Zunächst wurden, wie dies in Beispiel 1 bereits beschrieben worden ist, zwei Verbundkörper, die aus je einer Polymerfolie und einer Metallfolie bestanden, hergestellt. Sodann wurden die drei Metallfolien (Dicke 50 µm, Material-Nr. 1.4401), die beidseitig mit Graphitfolien verbunden werden sollten, entsprechend der Verfahrensweise von Beispiel 1 auf ihren beiden Flachseiten mit einem Belag aus einer Siloxan-Fettalkoholmischung versehen. Danach wurde ein Stapel mit folgender Schichtenabfolge hergestellt: 1. Verbundplatte aus Polymerfolie und Metallfolie, 2. Graphitfolie (Dicke 0,51 mm, Rohdichte 1,0 g/cm³), 3. Metallfolie, 4. Graphitfolie wie unter 2., 5. Metallfolie, 6. Graphitfolie wie unter 2., 7. Metallfolie, 8. Graphitfolie wie unter 2., 9. Verbundplatte aus Polymerfolie und Metallfolie. Dieser Stapel wurde wie in Beispiel 1 beschrieben, in eine geheizte Gesenkpresse überführt und dort zu einem Schichtstoff verpreßt.

### Beispiel 3:

Für Vergleichszwecke wurde ein Schichtstoff (4) entsprechend Figur 4 hergestellt, der aus einem mit einem Spießblech verstärkten Kern aus zwei Graphitfolien und einer beidseitigen Auflage aus einer Polymerfolie bestand. Dazu wurde zunächst ein aus zwei Graphitfolien und einem Spießblech bestehender Kern gemäß dem unter Beispiel 1 beschriebenen Verfahren hergestellt. Der so erhaltene Körper wurde sodann in einem Umluftofen bei 105 °C gründlich getrocknet. Der spießblechverstärkte Graphitfolienkörper wurde sodann in eine Polytetrafluorethylenfolie eingeschlagen, wie sie in den vorstehenden Beispielen ebenfalls verwendet worden war und das aus der Polymerfolie und dem spießblechverstärkten Kernkörper bestehende Paket in das zuvor auf 375 °C aufgeheizte Gesenk einer Heißpresse überführt und dort ungefähr 5 Minuten lang unter einem Preßdruck von 2 MPa verpreßt. Unter diesen Bedingungen verschweißten die Graphitfolien mit den Polymerfolien.

Mit Prüfkörpern aus Schichtstoffen, die nach den Beispielen 1, 2 und 3 hergestellt worden waren, wurden folgende Messungen durchgeführt:
- Ermittlung der Druckfestigkeit in Abhängigkeit von der Temperatur gemäß DIN 28090-1;
- Ermittlung des Kompressibilitäts- und des Rückfederungsverhaltens bei Raumtemperatur, bei 150°C und bei 300°C gemäß DIN 28090-2;

Außerdem wurde die spezifische Leckagerate in Abhängigkeit von der Bruttoflächenpressung an einer aus einem Schichtstoff gemäß Beispiel 1 hergestellten Flachdichtung mit einem Innenbördel aus Edelstahl (Werkstoff-Nr. 1.4571) im Vergleich zu einer entsprechenden Flachdichtung, die aus einem Schichtstoff hergestellt worden war, der lediglich aus zwei Graphitfolien bestand, zwischen denen ein Spießblech angeordnet war, ermittelt. Gegenüber dem erfindungsgemäßen Schichtstoff fehlte bei dem zum Vergleich verwendeten Schichtstoff die beidseitige Auflage aus der mit der Polymerfolie verbundenen Metallfolie.

In Tabelle 1 sind die Meßwerte der Druckfestigkeitsprüfung wiedergegeben:

**Tabelle 1**

| kritische Flächenpressung (MPa) im Zeitpunkt des Versagens des Schichtstoffs | | | |
|---|---|---|---|
| | Temperatur | | |
| Schichtstoff gemäß | 20°C | 150°C | 300°C |
| Beispiel 1 | 148 | 130 | 118 |
| Beispiel 2 | 138 | 120 | 112 |
| Beispiel 3, Vergleich | 119 | 88 | 71 |

Es ist zu erkennen, daß die erfindungsgemäßen Schichtstoffe bei allen Temperaturen eine erheblich höhere Druckfestigkeit als der Vergleichsschichtstoff aufweisen, wobei sich die erfindungsgemäßen Schichtstoffe beim Übergang zu höheren Temperaturen relativ besser verhalten.

Tabelle 2 gibt die das Kompressions- und das Rückfederungsverhalten kennzeichnenden Meßwerte bei Raumtemperatur und bei 150°C an:

**Tabelle 2**

| Kaltstauch- (KSW) und Kaltrückfederungswerte (KRW)bei 20°C sowie Warmstauch- (WSW) und Warmrückfederungswerte (WRW) bei 150°C; Messung gemäß DIN 28090-2 | | | | |
|---|---|---|---|---|
| | 20°C | | 150°C | |
| Schichtstoff gemäß | KSW(%) | KRW(%) | WSW(%) | WRW(%) |
| Beispiel 1 | 18,8 | 4,5 | 1,5 | 4,1 |
| Beispiel 2 | 20,1 | 4,7 | 0,8 | 4,4 |
| Beispiel 3, vergleich | 34,5 | 3,9 | 1,3 | 3,6 |
| KSW und WSW, gemessen entsprechend DIN 28091-3 bei einer Last, die eine Flächenpressung von 20 MPa erzeugt. | | | | |

Aus Tabelle 3 sind die Meßwerte für das Kompressions- und das Rückfederungsverhalten bei Raumtemperatur und bei 300°C zu entnehmen:

**Tabelle 3**

| Kaltstauch- (KSW) und Kaltrückfederungswerte (KRW) bei 20°C sowie Warmstauch- (WSW) und Warmrückfederungswerte (WRW) bei 300°C; Messung gemäß DIN 28090-2 | | | | |
|---|---|---|---|---|
| | 20°C | | 300°C | |
| Schichtstoff gemäß | KSW(%) | KRW(%) | WSW(%) | WRW(%) |
| Beispiel 1 | 26,1 | 4,0 | 2,8 | 4,2 |
| Beispiel 2 | 23,8 | 4,3 | 3,7 | 4,5 |
| Beispiel 3, Vergleich | 39,1 | 3,5 | 2,2 | 3,8 |
| KSW, gemessen bei einer Flächenpressung von 35 MPa gemäß DIN 28091-4 WSW, gemessen bei einer Flächenpressung von 50 MPa gemäß DIN 28091-4 | | | | |

Erläuterungen zu den Tabellen 2 und 3:

"KSW", Kaltstauchwert und "WSW", Warmstauchwert, sind Werte, die die Kompressibilität der Schichtstoffe bei Raumtemperatur und bei erhöhter Temperatur kennzeichnen. "KRW", Kaltrückfederungswert und "WRW", Warmrückfederungswert, sind Größen, die das Rückfederungsvermögen der Schichtstoffe nach vorheriger Kompression bei Raumtemperatur und bei erhöhter Temperatur kennzeichnen.

Aus den Tabellen 2 und 3 geht hervor, daß sich die erfindungsgemäßen Schichtstoffe nicht so stark zusammendrücken lassen, wie der Schichtstoff, der keine oberen Decklagen aus Metallfolien hat. Dagegen ist das Rückfederungsvermögen der erfindungsgemäßen Schichtstoffe in allen Temperaturbereichen mindestens ebenso gut wie das des Vergleichsschichtstoffes. Für die Anwendung der Schichtstoffe in Dichtungen bedeutet das, daß beim Anspannen der Flansche bei Verwendung von erfindungsgemäßen Schichtstoffen in den Dichtungen kleinere Wege zurückgelegt werden müssen als dies bei Dichtungen nach dem Stand der Technik der Fall ist, daß aber wegen des großen Rückfederungsvermögens die Dichtwirkung der erfindungsgemäßen Dichtungen besser ist. Dies gilt für einen Temperaturbereich von tiefsten Temperaturen bis zu 300°C.

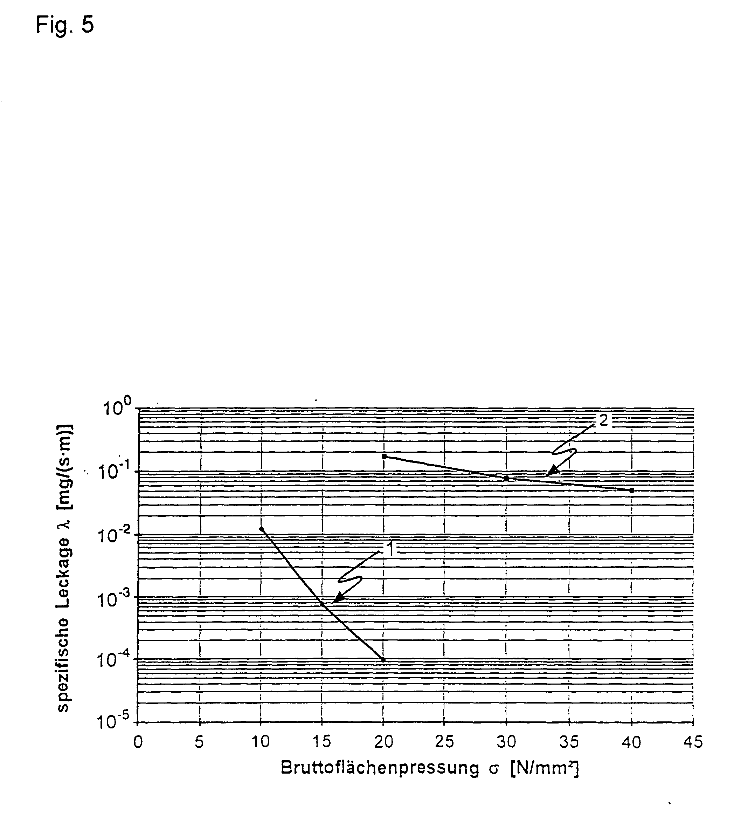

In Figur 5 ist die Dichtwirkung, gekennzeichnet durch die spezifische Leckagerate, für eine 2 mm dicke Flachdichtung (1) mit einem Innenbördel aus Edelstahlblech, Werkstoff-Nr. 1.4571, Dicke 0,15 mm, die aus einem Schichtstoff gemäß Beispiel 1 hergestellt worden ist, exemplarisch im Vergleich zu einer entsprechenden Dichtung (2) (Innenbördel aus 0,15 mm dickem Edelstahlblech, Werkstoff-Nr. 1.4571, Gesamtdicke der Dichtung 2 mm) die aus einem Schichtstoff hergestellt worden war, der lediglich aus zwei Graphitfolien bestand, zwischen denen ein Spießblech angeordnet war, dargestellt. Gegenüber dem erfindungsgemäßen Schichtstoff fehlte bei dem zum Vergleich verwendeten Schichtstoff die beidseitige Auflage aus der mit der Polymerfolie verbundenen Metallfolie. Die Prüfung wurde mit einem Innendruck von 40 bar Stickstoffgas gemäß DIN 28090-1 durchgeführt. Aus dem Diagramm in Figur 5 ist die große Überlegenheit der erfindungsgemäßen Schichtstoffe als Dichtungswerkstoffe ohne weitere Erläuterung klar zu erkennen. Schon bei vergleichsweise geringen Flächenpressungen sind damit so kleine Leckageraten zu erreichen wie sie mit den Vergleichsschichtstoffen niemals erreicht werden können. Mit Schichtstoffen gemäß der Erfindung können Dichtungen bereitgestellt werden, die die Dichtigkeitsanforderungen der Technischen Anleitung Luft von 0,01 mg/(s m) um mehrere Größenordnungen übertreffen. So können beispielsweise Leckagewerte von nur 0,001 mg/(s m) erreicht werden.

### Bezugszeichenliste

- 1: Schichtstoff 1 (Fig. 1)
- 2: Schichtstoff 2 (Fig. 2)
- 3: Schichtstoff 3 (Fig. 3)
- 4: Schichtstoff 4 (Fig. 4)
- 5: Kern aus Graphitlaminat oder Graphitfolie
- 6, 6': Metallfolie, z.B. aus Kupfer
- 7, 7': Polymerfolie, z.B. aus Polyetherketon
- 8, 8', 8'', 8''': Graphitfolien
- 9, 9', 9'', 9''': Metallfolien, z.B. aus Aluminium
- 10, 10': Polxmerfolien, z.B. aus Tetrafluorethylen-Perfluorpropylen-Copolymerisat
- 11, 11': Metallfolien, z.B. aus Edelstahl
- 12: Spießblech, z.B. aus Edelstahl
- 13, 13': Polymerfolie, z.B. aus PTFE
- 14, 14': Spieße des Spießblechs

## Patentansprüche

1. Schichtstoff mit großer Druckfestigkeit, guter Hitzebeständigkeit und geringer Permeabilität gegenüber Fluiden, der aus übereinander im Wechsel und parallel angeordneten Lagen von Graphitfolien und Metallfolien besteht und in dem die Graphitfolien mit den Metallfolien verbunden sind,
**dadurch gekennzeichnet, daß**
jede der beiden, den Schichtstoff (1;2;3) nach oben und unten begrenzenden Lagen aus einer Metallfolie (6;6';9;9'''';11;11') besteht,
daß diese, den Schichtstoff (1;2;3) nach oben und unten begrenzenden Metallfolien (6;6';9;9'''';11;11') auf ihren nach außen weisenden Flachseiten vollständig mit einer gasdichten Folie (7;7';10;10';13;13') aus einem organischen Polymer mit einer Dauertemperaturbeständigkeit von mindestens 150 °C bedeckt und mit dieser Folie klebmittelfrei verschweißt sind.

2. Schichtstoff nach Patentanspruch 1,
**dadurch gekennzeichnet, daß**
die Verbindungen der Graphitfolien (8;8';8'';8''')mit den Metallfolien (6;6';9;9';9'';9''';9'''';11;11') und die Verbindungen der Metallfolien (6;6';9;9'''';11;11') mit den Polymerfolien (7;7';10;10';13;13')frei von Klebstoffen sind.

3. Schichtstoff nach Patentanspruch 1 oder 2,
**dadurch gekennzeichnet, daß**
mindestens eine der im Inneren des Schichtstoffes (1;2;3) vorhandenen Metallfolien (9';9'';9'''), die auf ihren beiden Flachseiten mit je einer Graphitfolie (8;8';8'';8''') verbunden sind, ein Spießblech (12) ist.

4. Schichtstoff nach Patentanspruch 1, 2 oder 3,
**dadurch gekennzeichnet, daß**
er aus einer mittig angeordneten Metallfolie (6;9;11;12), zwei mit den Flachseiten dieser Metallfolie verbundenen Lagen Graphitfolie (8;8') und zwei mit den nach außen zeigenden Flachseiten der beiden Graphit-folien (8;8') verbundenen Metallfolien (6;6';9;9'''';11;11'), die auf ihren nach außen zeigenden Flachseiten vollständig mit einer Polymerfolie (7;7';10;10';13;13') verbunden sind, besteht.

5. Schichtstoff nach Patentanspruch 1 oder 2,
**dadurch gekennzeichnet, daß**
er aus einer mittig angeordneten Graphitfolie (5), die auf ihren beiden Flachseiten mit je einer Metallfolie (6;6';9;9'''';11;11'), deren nach außen weisende Oberflächen mit einer Polymerfolie (7;7';10;10';13;13') vollständig bedeckt sind, verbunden ist, besteht.

6. Schichtstoff gemäß einem oder mehreren der Patentansprüche 1 bis 5,
**dadurch gekennzeichnet, daß**
die Metallfolien (6;6';9;9';9'';9''';9'''';11;11';12) aus einem korrosionsfesten Metall, einer korrosionsfesten Metallegierung, aus Aluminium oder aus einer Aluminiumlegierung oder aus Kupfer oder aus einer Kupferlegierung bestehen.

7. Schichtstoff gemäß einem oder mehreren der Patentansprüche 1 bis 6,
**dadurch gekennzeichnet, daß**
die Metallfolien (6;6';9;9';9'';9''';9'''',11;11';12) eine Dicke im Bereich von 0,005 mm bis 1 mm haben.

8. Schichtstoff gemäß einem oder mehreren der Patentansprüche 1 bis 7,
**dadurch gekennzeichnet, daß**
die Graphitfolien (5;8;8';8'';8''') eine Rohdichte im Bereich von 0,1 g/cm³ bis 1,8 g/cm³ und einen Kohlenstoffgehalt von 90 bis 99,95 Gewichtsprozent aufweisen.

9. Schichtstoff gemäß einem oder mehreren der Patentansprüche 1 bis 8,
**dadurch gekennzeichnet, daß**
die Graphitfolien (5;8;8';8'';8''') eine Dicke von 0,1 mm bis 4,0 mm haben.

10. Schichtstoff gemäß einem oder mehreren der Patentansprüche 1 bis 9,
**dadurch gekennzeichnet, daß**
die Polymerfolie (7;7';10;10';13;13') aus einem Material aus der Gruppe Polyaryletheretherketon, Polyaryletherketon, Polyphenylensulfid, Polyarylsulfon, Polyethersulfon, Polyimid, Polyamidimid, fluorhaltige Polymere besteht.

11. Schichtstoff nach Patentanspruch 10,
**dadurch gekennzeichnet, daß**
die Polymerfolie (7;7';10;10';13;13') aus einem Material aus der Gruppe Polytetrafluorethylen, Polytrifluorchlorethylen, Tetrafluorethylen-Hexafluorpropylen-Copolymerisat, Copolymerisate von Tetrafluorethylen mit Perfluoralkylvinylether, Copolymerisate von Ethylen und Tetrafluorethylen, Polyvinylidenfluorid besteht.

12. Schichtstoff gemäß Patentanspruch 11,
**dadurch gekennzeichnet, daß**
die Polymerfolie (7;7';10;10';13;13') aus einem perfluorierten organischen Polymer besteht.

13. Schichtstoff gemäß einem oder mehreren der Patentansprüche 1 bis 12,
**dadurch gekennzeichnet, daß**
die Polymerfolien (7;7';10;10';13;13') eine Dicke im Bereich von 0,005 mm bis 1,0 mm aufweisen.

14. Verfahren zur Herstellung eines Schichtstoffes nach einem der Patentansprüche 1 bis 13,
**dadurch gekennzeichnet, daß**
die gasdichten Folien (7;7';10;10';13;13') aus einem organischen Polymer mit einer Dauertemperaturbeständigkeit von mindestens 150 °C mit den Metallfolien (6;6';9;9'''';11;11') thermisch verschweißt werden, wobei während des Schweißprozesses die Metallfolien und die Polymerfolien eine Temperatur aufweisen, die im Schmelzbereich der Polymerfolien liegt oder
die Metallfolien eine Temperatur aufweisen, die im oberen Bereich des Schmelzbereichs der Polymerfolien liegt und die Polymerfolien eine Temperatur haben, die unterhalb diese Bereichs liegt.

15. Verfahren zur Herstellung eines Schichtstoffes nach einem der Patentansprüche 1 bis 13,
**dadurch gekennzeichnet, daß**
die gasdichten Folie (7;7';10;10';13;13') aus einem organischen Polymer mit einer Dauertemperaturbeständigkeit von mindestens 150 °C mit den Metallfolien (6;6';9;9'''';11;11') thermisch und unter Druckeinwirkung verschweißt werden, wobei während des Schweißprozesses die Metallfolien und die Polymerfolien eine Temperatur aufweisen, die im Schmelzbereich der Polymerfolien liegt oder
die Metallfolien eine Temperatur aufweisen, die im oberen Bereich des Schmelzbereichs der Polymerfolien liegt und
die Polymerfolien eine Temperatur haben, die unterhalb diese Bereichs liegt.

16. Verfahren zur Herstellung eines Schichtstoffes nach Patentanspruch 12,
**dadurch gekennzeichnet, daß**
die gasdichten Folien (7;7';10;10';13;13') aus einem perfluorierten organischen Polymer mit den Metallfolien (6;6';9;9'''';11;11') bei einer Temperatur im Bereich von 370 °C bis 380 °C und unter einem Druck von maximal 2 MPa verschweißt werden.

17. Verfahren zur Herstellung eines Schichtstoffs nach einem der Patentansprüche 1 bis 13,
**dadurch gekennzeichnet, daß**
die Graphitfolien (8;8';8'';8''') auf die Metallfolien (6;6';9;9';9'';9''';9'''';11;11') unter Anwendung von Druck und erhöhter Temperatur aufgepreßt sind.

18. Verfahren zur Herstellung eines Schichtstoff nach einem der Patentansprüche 1 bis 13,
**dadurch gekennzeichnet, dass**
die Graphitfolien (8;8';8'';8''') auf die Metallfolien (6;6';9;9';9'';9''';9'''';11;11') mit einer dünnen Schicht aus einer Mischung aus einer Siloxan-Emulsion und einem Fettalkohol zwischen den zu verbindenden Oberflächen unter Anwendung von Druck und erhöhter Temperatur aufgepresst sind.

19. Verwendung eines Schichtstoffes gemäß einem oder mehreren der Patentansprüche 1 bis 13 als Werkstoff für das Herstellen von Dichtungen.

## Claims

1. Laminate that has a high compressive strength, good heat resistance and low permeability to fluids, that comprises alternating layers of graphite sheets and metal sheets disposed one above the other and in parallel and in which the graphite sheets are joined to the metal sheets,
**characterized in that**
each of the two layers forming the boundary of the laminate (1; 2; 3) at the top and bottom are composed of a metal sheet (6; 6'; 9; 9''''; 11; 11')
and **in that** these metal sheets (6; 6'; 9; 9''''; 11; 11') forming the boundary of the laminate (1; 2; 3) at the top and bottom are completely covered on their outward-facing flat sides with a gas-tight sheet (7; 7'; 10; 10'; 13; 13') composed of an organic polymer having a long-term heat resistance of at least 150°C and are welded to this sheet without adhesive.

2. Laminate according to Patent Claim 1,
**characterized in that**
the joints of the graphite sheets (8; 8'; 8"; 8''') to the metal sheets (6; 6'; 9; 9'; 9"; 9'''; 9''''; 11; 11') and the joints of the metal sheets (6; 6'; 9; 9''''; 11; 11') to the polymer sheets (7; 7'; 10; 10'; 13; 13') are free of adhesives.

3. Laminate according to Patent Claim 1 or 2,
**characterized in that**
at least one of the metal sheets (9'; 9"; 9''') that are present in the interior of the laminate (1; 2; 3) and that are joined to one graphite sheet (8; 8'; 8"; 8''') on each of their two flat sides is a tined metal sheet (12).

4. Laminate according to Patent Claim 1, 2 or 3,
**characterized in that**
it comprises a centrally disposed metal sheet (6; 9; 11; 12), two layers of graphite sheet (8; 8') joined to the flat sides of this metal sheet and two metal sheets (6; 6'; 9; 9''''; 11; 11') joined to the outward-facing flat sides of the two graphite sheets (8; 8'), the metal sheets being completely joined to a polymer sheet (7; 7'; 10; 10'; 13; 13') on their outward-facing flat sides.

5. Laminate according to Patent Claim 1 or 2,
**characterized in that**
it comprises a centrally disposed graphite
sheet (5) that is joined on its two flat sides to one metal sheet (6; 6'; 9; 9''''; 11; 11') in each case, whose outward-facing surfaces are completely covered with a polymer sheet (7; 7'; 10; 10'; 13; 13').

6. Laminate according to one or more of Patent Claims 1 to 5,
**characterized in that**
the metal sheets (6; 6'; 9; 9'; 9"; 9'''; 9''''; 11; 11'; 12) are composed of a corrosion-resistant metal, a corrosion-resistant metal alloy, of aluminium or of an aluminium alloy or of copper or of a copper alloy.

7. Laminate according to one or more of Patent Claims 1 to 6,
**characterized in that**
the metal sheets (6; 6'; 9; 9'; 9"; 9'''; 9''''; 11; 11'; 12) have a thickness ranging from 0.005 mm to 1 mm.

8. Laminate according to one or more of Patent Claims 1 to 7,
**characterized in that**
the graphite sheets (5; 8; 8'; 8"; 8''') have a bulk density ranging from 0.1 g/cm³ to 1.8 g/cm³ and a carbon content of 90 to 99.95 wt%.

9. Laminate according to one or more of Patent Claims 1 to 8,
**characterized in that**
the graphite sheets (5; 8; 8'; 8"; 8''') have a thickness of 0.1 mm to 4.0 mm.

10. Laminate according to one or more of Patent Claims 1 to 9,
**characterized in that**
the polymer sheet (7; 7'; 10; 10'; 13; 13') is composed of a material from the group comprising polyarylether ether ketone, polyaryl ether ketone, polyphenylene sulfide, polyaryl sulfone, polyether sulfone, polyimide, polyamide imide and fluorine-containing polymers.

11. Laminate according to Patent Claims 10,
**characterized in that**
the polymer sheet (7; 7'; 10; 10'; 13; 13') is composed of a material from the group comprising polytetrafluoroethylene, polytrifluorochloroethylene, tetrafluoroethylene/hexafluoropropylene copolymer, copolymers of tetrafluoroethylene with perfluoroalkyl vinyl ether, copolymers of ethylene and tetrafluoroethylene, polyvinylidine fluoride.

12. Laminate according to Patent Claims 11,
**characterized in that**
the polymer sheet (7; 7'; 10; 10'; 13; 13') is composed of perfluorinated organic polymer.

13. Laminate according to one or more of Patent Claims 1 to 12,
**characterized in that**
the polymer sheets (7; 7'; 10; 10'; 13; 13') have a thickness ranging from 0.005 mm to 1.0 mm.

14. Method of producing a laminate according to any one of Patent Claims 1 to 13,
**characterized in that**
the gas-tight sheets (7; 7'; 10; 10'; 13; 13') composed of an organic polymer having a long-term heat resistance of at least 150°C are thermally welded to the metal sheets (6; 6'; 9; 9''''; 11; 11'), wherein the metal sheets and the polymer sheets are at a temperature that is in the melting range of the polymer sheets during the welding process or the metal sheets are at a temperature that is in the upper region of the melting range of the polymer sheets and the polymer sheets being at a temperature that is below this range.

15. Method of producing a laminate according to any one of Patent Claims 1 to 13,
**characterized in that**
the gas-tight sheets (7; 7'; 10; 10'; 13; 13') composed of an organic polymer having a long-term heat resistance of at least 150°C are thermally welded to the metal sheets (6; 6'; 9; 9''''; 11; 11') under the action of pressure, wherein the metal sheets and the polymer sheets are at a temperature that is in the melting range of the polymer sheets during the welding process or the metal sheets are at a temperature that is in the upper region of the melting range of the polymer sheets and the polymer sheets being at a temperature that is below this range.

16. Method of producing a laminate according to Patent Claim 12,
**characterized in that**
the gas-tight sheets (7; 7'; 10; 10'; 13; 13') composed of a perfluorinated organic polymer are welded to the metal sheets (6; 6'; 9; 9''''; 11; 11') at a temperature ranging from 370°C to 380°C and under a pressure of not more than 2 MPa.

17. Method of producing a laminate according to any one of Patent Claims 1 to 13,
**characterized in that**
the graphite sheets (8; 8'; 8"; 8''') are pressed onto the metal sheets (6; 6'; 9; 9'; 9"; 9'''; 9''''; 11; 11') under the application of pressure and elevated temperature.

18. Method of producing a laminate according to any one of Patent Claims 1 to 13,
**characterized in that**
the graphite sheets (8; 8'; 8"; 8''') are pressed onto the metal sheets (6; 6'; 9; 9'; 9"; 9'''; 9''''; 11; 11') with a thin layer composed of a mixture of a siloxane emulsion and a fatty alcohol between the surfaces to be joined under the application of pressure and elevated temperature.

19. Use of a laminate according to one or more of Patent Claims 1 to 13 as a material for producing seals.

## Revendications

1. Matériau en couches ayant une grande résistance à la pression, une bonne résistance à la chaleur et une faible perméabilité aux fluides, qui est constitué de couches, disposées les unes au-dessus des autres en alternance et parallèlement, de feuilles de graphite et de feuilles de métal, et dont les feuilles de graphite sont reliées avec les feuilles de métal,
**caractérisée en ce que**
chacune des deux couches délimitant le matériau en couches (1, 2, 3) vers le haut et vers le bas est constituée d'une feuille de métal (6, 6' ; 9,9'''' ; 11, 11'),
ces feuilles de métal (6, 6' ; 9,9"" ; 11, 11') délimitant le matériau en couches (1, 2, 3) vers le haut et vers le bas sont recouvertes, sur leurs faces planes dirigées vers l'extérieur, complètement par une feuille étanche aux gaz (7, 7' ; 10, 10' ; 13, 13') en un polymère organique ayant une résistance permanente aux températures d'au moins 150°C, et soudées sans colle avec cette feuille.

2. Matériau en couches selon la revendication 1,
**caractérisé en ce que**
les liaisons des feuilles de graphite (8, 8', 8", 8''') avec les feuilles de métal (6, 6' ; 9, 9', 9", 9''', 9"" ; 11, 11') et les liaisons des feuilles de métal (6, 6' ; 9,9'''' ; 11, 11') avec les feuilles de polymère (7, 7' ; 10, 10' ; 13, 13') sont exemptes de colles.

3. Matériau en couches selon la revendication 1 ou 2,
**caractérisé en ce qu'**
au moins une des feuilles de métal (9', 9", 9") présentes dans l'intérieur du matériau en couches (1, 2, 3), qui sont reliées sur leurs deux faces planes respectivement avec une feuille de graphite (8, 8', 8", 8'''), est une tôle à tiges (12).

4. Matériau en couches selon la revendication 1, 2 ou 3,
**caractérisée en ce qu'**
il est constitué d'une feuille de métal (6, 9, 11, 12) disposée au milieu, de deux couches de feuille de graphite (8, 8') reliées avec les faces planes de cette feuille de métal et de deux feuilles de métal (6, 6' ; 9, 9'''' ; 11, 11') reliées avec les faces planes, dirigées vers l'extérieur, des deux feuilles de graphite (8, 8'), qui sont reliées, sur leurs faces planes dirigées vers l'extérieur, complètement avec une feuille de polymère (7, 7' ; 10, 10' ; 13, 13').

5. Matériau en couches selon la revendication 1 ou 2,
**caractérisé en ce qu'**
il est constitué d'une feuille de graphite (5) disposée au milieu, qui est reliée sur ses deux faces planes avec respectivement une feuille de métal (6, 6' ; 9, 9"" ; 11, 11'), dont les surfaces dirigées vers l'extérieur sont recouvertes complètement d'une feuille de polymère (7, 7' ; 10, 10' ; 13, 13').

6. Matériau en couches selon une ou plusieurs des revendications 1 à 5,
**caractérisé en ce que**
les feuilles de métal (6, 6' ; 9, 9', 9", 9''', 9"" ; 11, 11', 12) sont constituées d'un métal résistant à la corrosion, d'un alliage de métal résistant à la corrosion, d'aluminium ou d'un alliage d'aluminium ou de cuivre ou d'un alliage de cuivre.

7. Matériau en couches selon une ou plusieurs des revendications 1 à 6,
**caractérisé en ce que**
les feuilles de métal (6, 6' ; 9, 9', 9", 9''', 9"" ; 11, 11', 12) ont une épaisseur dans la gamme de 0,005 mm à 1 mm.

8. Matériau en couches selon une ou plusieurs des revendications 1 à 7,
**caractérisé en ce que**
les feuilles de graphite (5, 8, 8', 8", 8''') ont une masse volumique apparente dans la gamme de 0,1 g/cm³ à 1,8 g/cm³ et une teneur en carbone de 90 à 99,95 pour cent en poids.

9. Matériau en couches selon une ou plusieurs des revendications 1 à 8,
**caractérisé en ce que**
les feuilles de graphite (5, 8, 8', 8", 8''') ont une épaisseur de 0,1 mm à 4,0 mm.

10. Matériau en couches selon une ou plusieurs des revendications 1 à 9,
**caractérisé en ce que**
la feuille de polymère (7, 7' ; 10, 10' ; 13, 13') est constituée d'une matière du groupe polyaryléther-éther-cétone, polyaryléther-cétone, sulfure de polyphénylène, polyarylsulfone, polyéthersulfone, polyimide, polyamidimide, polymères contenant du fluor.

11. Matériau en couches selon la revendication 10,
**caractérisé en ce que**
la feuille de polymère (7, 7' ; 10, 10' ; 13, 13') est constituée d'une matière du groupe polytétrafluoroéthylène, polytrifluorochloréthylène, copolymérisat de tétrafluoroéthylène-hexafluoropropylène, copolymérisats de tétrafluoroéthylène avec perfluoroalkylvinyléther, copolymérisats d'éthylène et de tétrafluoroéthylène, fluorure de polyvinylidène.

12. Matériau en couches selon la revendication 11,
**caractérisé en ce que**
la feuille de polymère (7, 7' ; 10, 10' ; 13, 13') est constituée d'un polymère organique perfluoré.

13. Matériau en couches selon une ou plusieurs des revendications 1 à 12,
**caractérisé en ce que**
les feuilles de polymère (7, 7' ; 10, 10' ; 13, 13') présentent une épaisseur dans la gamme de 0,005 mm à 1,0 mm.

14. Procédé de fabrication d'un matériau en couches selon l'une des revendications 1 à 13,
**caractérisé en ce que**
les feuilles étanches au gaz (7, 7' ; 10, 10' ; 13, 13') constituées d'un polymère organique ayant une résistance permanente aux températures d'au moins 150°C sont soudées thermiquement avec les feuilles de métal (6, 6' ; 9, 9'''' ; 11, 11'),
pendant le processus de soudage, les feuilles de métal et les feuilles de polymère présentent une température qui se situe dans la plage de fusion des feuilles de polymère,
les feuilles de métal présentent une température qui se situe dans la gamme supérieure de la plage de fusion des feuilles de polymère et les feuilles de polymère ont une température qui se situe en dessous de cette gamme.

15. Procédé de fabrication d'un matériau en couches selon l'une des revendications 1 à 13,
**caractérisé en ce que**
les feuilles étanches au gaz (7, 7' ; 10, 10' ; 13, 13') constituées d'un polymère organique ayant une résistance permanente aux températures d'au moins 150°C sont soudées avec les feuilles de métal (6, 6' ; 9, 9"" ; 11, 11') thermiquement et sous action de la pression,
pendant le processus de soudage, les feuilles de métal et les feuilles de polymère présentent une température qui se situe dans la plage de fusion des feuilles de polymère
les feuilles de métal présentent une température qui se situe dans la gamme supérieure de la plage de fusion des feuilles de polymère et les feuilles de polymère ont une température qui se situe en dessous de cette gamme.

16. Procédé de fabrication d'un matériau en couches selon la revendication 12,
**caractérisé en ce que**
les feuilles étanches au gaz (7, 7' ; 10, 10' ; 13, 13') constituées d'un polymère organique perfluoré sont soudées avec les feuilles de métal (6, 6' ; 9, 9"" ; 11, 11') à une température dans la gamme de 370°C à 380°C et sous une pression maximale de 2 MPa.

17. Procédé de fabrication d'un matériau en couches selon l'une des revendications 1 à 13,
**caractérisé en ce que**
les feuilles de graphite (8, 8', 8", 8"') sont pressées sur les feuilles de métal (6, 6' ; 9, 9' 9", 9''', 9'''' ; 11, 11') sous application de la pression et d'une température accrue.

18. Procédé de fabrication d'un matériau en couches selon l'une des revendications 1 à 13,
**caractérisé en ce que**
les feuilles de graphite (8, 8', 8", 8''') sont pressées sur les feuilles de métal (6, 6' ; 9, 9' 9", 9''', 9'''' ; 11, 11'), avec une couche fine d'un mélange constitué d'une émulsion de siloxane et d'un alcool gras, entre les surfaces à relier sous application de la pression et d'une température accrue.

19. Application d'un matériau en couches selon une ou plusieurs des revendications 1 à 13, en tant que matériau pour la fabrication de garnitures d'étanchéité.
